# DEMANDE DE BREVET EUROPEEN

(11) **EP 3 144 228 A1**
(43) Date de publication de la demande: **22.03.2017**
(21) Numéro de dépôt: 16188885.4
(22) Date de dépôt: 15.09.2016
(51) Int. Cl.: B64G 1/28, B64G 1/22

(54) **ACTIONNEUR GYROSCOPIQUE A DOUBLE GUIDAGE CARDAN, ELEMENT DE SUSPENSION ET ELEMENT DE BUTEE**

(30) Priorité: 18.09.2015 FR 1501932
(71) Demandeur: Thales, 92400 Courbevoie (FR); CENTRE NATIONAL D'ETUDES SPATIALES, 75001 Paris (FR)
(72) Inventeur: GANS, Gilles, 06156 CANNES LA BOCCA CEDEX (FR); JEANDOT, Xavier, 06156 CANNES LA BOCCA CEDEX (FR); CARTE, Gilles, 06156 CANNES LA BOCCA CEDEX (FR)
(74) Mandataire: Collet, Alain

(57) **Abrégé**

L'invention s'applique au domaine spatial et concerne un actionneur gyroscopique (10) à double guidage destiné à équiper un satellite comprenant une structure principale (11) reliée à une plateforme (12), ladite plateforme (12) étant destinée à être reliée au satellite, un anneau, un berceau en forme de U, ayant une première extrémité (19) et une seconde extrémité (20) et une partie centrale, une roue à inertie (21) montée sur la partie centrale du berceau entre la première et la seconde extrémités (19, 20), la roue à inertie (21) étant mobile en rotation par rapport au berceau autour d'un premier axe de rotation (22). Selon l'invention, il comprend un premier palier (23) positionné à la première extrémité (19) du berceau et un second palier (24) positionné à la seconde extrémité (20) du berceau reliant l'anneau au berceau, les premier et second paliers (23, 24) étant configurés pour rendre le berceau mobile en rotation par rapport à l'anneau autour d'un deuxième axe de rotation (25) sensiblement perpendiculaire au premier axe de rotation (22), l'anneau est relié à la structure principale (11), et l'actionneur gyroscopique (10) comprend au moins un élément de suspension (13) apte à limiter des micro-vibrations issues du berceau et de la roue à inertie (21) et au moins un élément de butée (14) apte à limiter un débattement du berceau et de la roue à inertie (21) par rapport à la structure principale (11).

## Description

L'invention concerne un actionneur gyroscopique à double guidage avec des éléments de suspension et de butée. L'invention peut s'appliquer dans le domaine spatial afin de contrôler et modifier l'orientation des engins spatiaux comme par exemple les satellites.

Un actionneur gyroscopique, aussi connu sous l'abréviation CMG pour son acronyme anglo-saxon « Control Momentum Gyroscope », a pour fonction principale de générer un couple gyroscopique par combinaison de deux mouvements. La rotation à vitesse constante d'une roue à inertie selon l'axe de rotation de la roue crée un moment cinétique. Puis on impose une vitesse au moment cinétique dans l'axe perpendiculaire à l'axe de rotation de la roue. Cet axe est appelé l'axe cardan, c'est l'axe de rotation qui fait tourner la roue sur son axe transverse. Il en résulte un couple gyroscopique de l'ordre de plusieurs dizaines de Newton-mètres transmis à la plateforme du satellite. Autrement dit, un actionneur gyroscopique génère un couple gyroscopique par la combinaison d'un moment cinétique créé par la rotation d'une roue à inertie tournant à vitesse constante et par la vitesse de rotation d'un axe cardan perpendiculaire à l'axe de rotation de la roue. Un inconvénient majeur est que ces deux rotations génèrent chacune des micro-vibrations qui sont ensuite transmises à la plateforme et perturbent la stabilité de la ligne de visée de l'instrument d'observation du satellite.

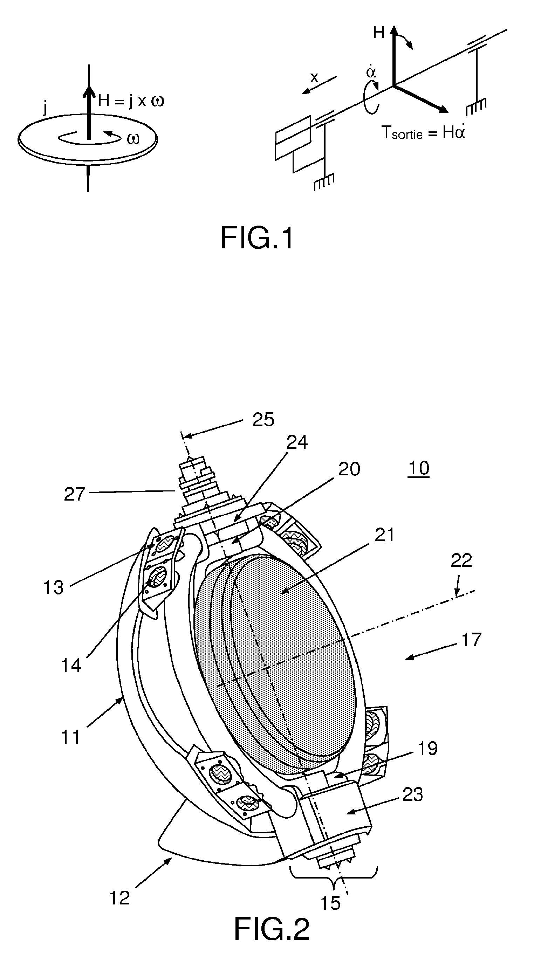

Ce principe de fonctionnement est schématisé à la figure 1. La fonction principale de l'actionneur gyroscopique est réalisée par la combinaison du moment cinétique H d'une roue à inertie et de la vitesse de rotation d'un cardan. Le couple gyroscopique résultant est le produit vectoriel de H et de la vitesse de rotation du cardan.

Dans l'art antérieur, il existe différents types d'actionneur gyroscopique de pilotage de l'attitude d'un véhicule spatial tel qu'un satellite. Un inconvénient des actionneurs de l'art antérieur vient du fait que la roue à inertie est déportée par rapport à la partie motorisation et guidage du cardan. De ce fait, la partie guidage et notamment le roulement reprend la totalité des sollicitations de flexion lors de la phase de lancement du satellite sur lequel l'actionneur est monté. Comme la roue n'est pas gerbée, pour tenir les charges importantes de la phase de lancement, on applique à ce roulement une certaine précontrainte. Cependant, cette précontrainte a pour conséquence de réduire la durée de vie du roulement et donc de l'actionneur.

Un autre inconvénient des actionneurs gyroscopiques connus de l'art antérieur réside dans leur encombrement qui les empêche de tenir dans un volume restreint.

Un inconvénient supplémentaire des actionneurs gyroscopiques connus de l'art antérieur vient du fait de la génération de micro-vibrations dues à la rotation de la roue à inertie à haute vitesse et à la rotation du cardan. Ces micro-vibrations peuvent se propager dans la plateforme du satellite et perturber les équipements comme par exemple des instruments de prise de vues.

L'invention vise à pallier tout ou partie des problèmes cités plus haut en proposant un actionneur gyroscopique compact ayant une architecture spécifique avec un cardan guidé par deux systèmes de guidage de part et d'autre d'une roue à inertie et l'implantation d'éléments de suspension et de butée pour filtrer à la source les micro-vibrations générées par la rotation de la roue à inertie et par la rotation du cardan.

A cet effet, l'invention a pour objet un actionneur gyroscopique à double guidage destiné à équiper un satellite comprenant :
- une structure principale reliée à une plateforme du satellite,
- un anneau,
- un berceau ayant une première extrémité et une seconde extrémité,
- une roue à inertie montée sur le berceau entre la première et la seconde extrémités, la roue à inertie étant mobile en rotation par rapport au berceau autour d'un premier axe de rotation,
caractérisé en ce qu'il comprend un premier palier positionné à la première extrémité du berceau et un second palier positionné à la seconde extrémité du berceau reliant l'anneau au berceau, les premier et second paliers étant configurés pour rendre le berceau mobile en rotation par rapport à l'anneau autour d'un deuxième axe de rotation sensiblement perpendiculaire au premier axe de rotation, et en ce que l'anneau est relié à la structure principale.

Avantageusement, l'actionneur gyroscopique selon l'invention comprend au moins un élément de suspension apte à limiter des micro-vibrations issues du berceau et de la roue à inertie.

Avantageusement, l'actionneur gyroscopique selon l'invention comprend en outre au moins un élément de butée apte à limiter un débattement du berceau et de la roue à inertie par rapport à la structure principale.

Selon un mode de réalisation, l'actionneur gyroscopique selon l'invention peut comprendre une motorisation dans la première extrémité du berceau destinée à entraîner le berceau en rotation autour du deuxième axe de rotation.

Selon un autre mode de réalisation, l'actionneur gyroscopique selon l'invention peut comprendre un élément de transfert de puissance et de signaux dans la seconde extrémité du berceau destiné à transférer une puissance et des signaux entre la roue à inertie et la plateforme.

Avantageusement, le berceau et la roue à inertie formant un sous-ensemble ayant un centre de gravité, le sous-ensemble est configuré pour avoir son centre de gravité sur le deuxième axe de rotation.

Avantageusement, l'anneau, le berceau et la roue à inertie formant un ensemble suspendu, la roue à inertie et le berceau constituant deux composants d'un premier bloc, l'ensemble suspendu et la structure principale constituant deux composants d'un deuxième bloc, l'actionneur gyroscopique et la plateforme constituant deux composants d'un troisième bloc, le au moins un élément de suspension est positionné entre les deux composants d'un bloc.

Avantageusement, le au moins un élément de butée est positionné entre les deux composants d'un bloc.

Avantageusement, l'anneau, le berceau et la roue à inertie formant un ensemble suspendu ayant un centre de gravité, le au moins un élément de suspension ayant un isobarycentre, le au moins un élément de suspension est aménagé de façon à ce que l'isobarycentre du au moins un élément de suspension coïncide sensiblement avec le centre de gravité de l'ensemble suspendu.

Avantageusement, le au moins un élément de butée ayant un isobarycentre, le au moins un élément de butée est aménagé de façon à ce que l'isobarycentre du au moins un élément de butée coïncide sensiblement avec le centre de gravité de l'ensemble suspendu.

L'invention concerne aussi un satellite comprenant au moins trois actionneurs gyroscopiques à double guidage cardan tels que décrits dans cette demande et configurés pour gérer l'orientation du satellite.

L'invention sera mieux comprise et d'autres avantages apparaîtront à la lecture de la description détaillée d'un mode de réalisation donné à titre d'exemple, description illustrée par le dessin joint dans lequel :
- la figure 1, déjà commentée, illustre le principe de fonctionnement d'un actionneur gyroscopique,
- la figure 2 représente l'architecture d'un actionneur gyroscopique à double guidage selon l'invention,
- la figure 3 représente le sous-ensemble cardan de l'actionneur gyroscopique à double guidage selon l'invention,
- la figure 4 représente l'ensemble suspendu de l'actionneur gyroscopique à double guidage selon l'invention,
- la figure 5 représente un exemple de configuration des modules de suspension et des modules de butée de l'actionneur gyroscopique à double guidage selon l'invention,
- la figure 6 représente un autre exemple de configuration des éléments de suspension et des éléments de butée de l'actionneur gyroscopique à double guidage selon l'invention,
- la figure 7 représente un mode de réalisation de la structure principale de l'actionneur gyroscopique à double guidage selon l'invention,
- la figure 8 représente schématiquement un satellite comprenant au moins trois actionneurs gyroscopiques selon l'invention.

Par souci de clarté, les mêmes éléments porteront les mêmes repères dans les différentes figures.

L'actionneur gyroscopique à double guidage cardan est destiné au positionnement des satellites agiles. L'invention repose sur deux points principaux. Tout d'abord, l'actionneur gyroscopique dispose d'une architecture spécifique avec un cardan guidé par deux paliers, ou éléments de guidage, de part et d'autre d'une roue à inertie. Par ailleurs, des éléments de suspension et de butée sont implantés pour filtrer les micro-vibrations générées à la source par la rotation de la roue et par la rotation du sous-ensemble cardan composé par le berceau et la roue à inertie. En effet, un actionneur gyroscopique génère un couple gyroscopique par la combinaison d'un moment cinétique créé par la rotation d'une roue à inertie tournant à vitesse constante et par la vitesse de rotation d'un axe cardan perpendiculaire à l'axe de rotation de la roue. Ces deux rotations génèrent chacune des micro-vibrations qui sont ensuite transmises à la plateforme du satellite et perturbent la stabilité de la ligne de visée de l'instrument d'observation.

Lors des phases de manoeuvre et de prise de vue par les instruments scientifiques à bord du satellite, les actionneurs gyroscopiques mettent en rotation l'axe cardan, la roue à inertie étant en rotation à vitesse constante, pour créer un couple gyroscopique. Selon l'invention, les micro-vibrations générées par ces deux mouvements sont atténuées par l'implantation de plusieurs éléments de suspension pour réduire au mieux la transmission des perturbations à la plateforme. L'ensemble mobile étant suspendu par les éléments de suspension et non gerbé lors du lancement, il est nécessaire d'implanter des éléments de butée pour limiter les débattements dynamiques de la masse mobile, c'est-à-dire l'ensemble suspendu composé du sous-ensemble cardan et de l'anneau, lors du lancement et transmettre les charges de lancement à la structure principale avec atténuation associée via ces éléments de butée.

La figure 2 représente l'architecture d'un actionneur gyroscopique 10 à double guidage selon l'invention. L'actionneur gyroscopique 10 à double guidage est destiné à équiper un satellite. Il comprend une structure principale 11 reliée à une plateforme 12 du satellite, un anneau 16, un berceau 18 ayant une première extrémité 19 et une seconde extrémité 20 et une roue à inertie 21 montée sur le berceau 18 entre la première et la seconde extrémités 19, 20, la roue à inertie 21 étant mobile en rotation par rapport au berceau 18 autour d'un premier axe de rotation 22. Le berceau 18 a une forme de U. On entend par forme de U toute forme assimilable à un U, c'est-à-dire toute forme ayant une partie centrale s'étendant selon une direction et se terminant par deux extrémités s'étendant dans une autre direction sensiblement perpendiculairement à la direction de la partie centrale. A l'extrême, le berceau 18 peut également avoir sensiblement la forme d'un demi-cercle. Le berceau 18 est configuré pour permettre la rotation de la roue à inertie 21 positionnée sur la partie centrale entre ses deux extrémités. Par exemple, la roue à inertie 21 peut être montée dans un carter et le carter peut être monté sur le berceau 18, sans mouvement relatif entre le carter et le berceau 18. Ou bien d'autres configurations sont envisageables selon la forme du berceau 18. Selon l'invention, l'actionneur gyroscopique 10 comprend un premier palier 23 positionné à la première extrémité 19 du berceau 18 et un second palier 24 positionné à la seconde extrémité 20 du berceau 18 reliant l'anneau 16 au berceau 18, les premier et second paliers 23, 24 étant configurés pour rendre le berceau 18 mobile en rotation par rapport à l'anneau 16 autour d'un deuxième axe de rotation 25 sensiblement perpendiculaire au premier axe de rotation 22. Selon l'invention, l'anneau 16 est relié à la structure principale 11.

Avantageusement, l'actionneur gyroscopique 10 comprend au moins un élément de suspension 13 apte à limiter des micro-vibrations issues de la rotation du berceau 18 et de la roue à inertie 21.

Avantageusement, l'actionneur gyroscopique 10 selon l'invention peut comprendre en outre au moins un élément de butée 14 apte à limiter un débattement du berceau 18 et de la roue à inertie 21 par rapport à la structure principale 11.

Dans cette demande, en ce qui concerne l'anneau 16, nous parlerons uniquement d'anneau pour faciliter la compréhension mais le terme anneau est à comprendre au sens large. L'anneau est à comprendre comme un volume ajouré en son centre. Il peut s'agir d'un solide de révolution tel qu'un tore ou tout autre polyèdre ajouré en son centre, c'est-à-dire un polyèdre dont la section peut prendre diverses formes. L'anneau peut également être un polygone ajouré. L'anneau 16 est ajouré de façon à ce que la roue à inertie 21 soit placée dans l'ajourement, le plan médian de l'anneau 16 n'étant pas nécessairement confondu avec celui de la roue à inertie 21.

Dans cette demande, l'anneau 16 est représenté en une seule pièce. Il est bien entendu qu'on ne sort pas du cadre de l'invention en considérant un anneau composé de plusieurs sous-parties reliées entre elles par des moyens de fixation connus. Il en est de même pour le berceau 18 et la structure principale 11.

Le berceau 18 et la roue à inertie 21 forment un sous-ensemble appelé sous-ensemble cardan 17. Et l'anneau 16 et le sous-ensemble cardan 17 forment l'ensemble suspendu 15.

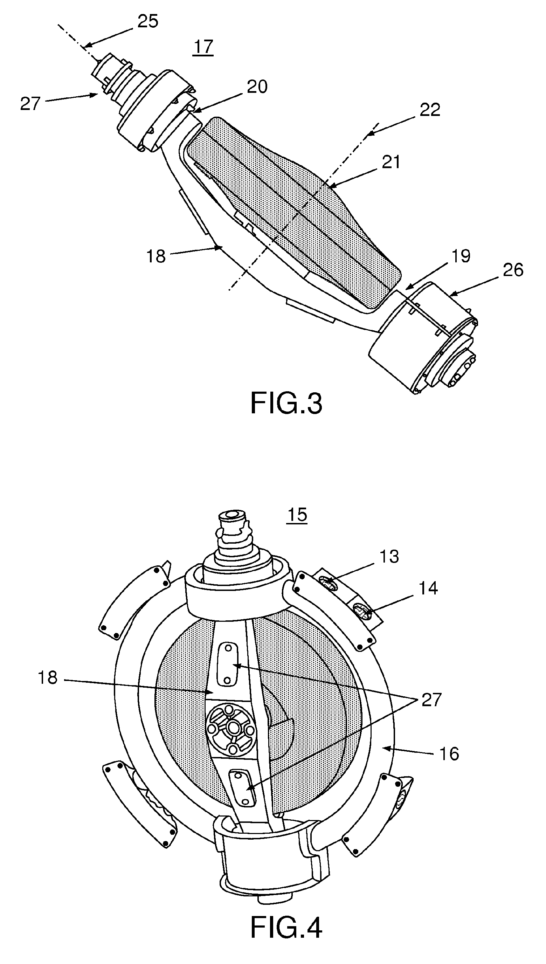

La figure 3 représente le sous-ensemble cardan 17 de l'actionneur gyroscopique 10 à double guidage selon l'invention. Comme décrit précédemment, le sous-ensemble cardan 17 est composé de la roue à inertie 21 montée sur le berceau 18, le berceau 18 est guidé par deux paliers 23, 24, aussi appelés éléments de guidage, en ces deux extrémités 19, 20. Les paliers 23, 24 peuvent être tout type de paliers adaptés. On peut par exemple citer des paliers lisses ou préférentiellement des paliers à roulements, tels que, par exemple, des roulements à billes ou des roulements à rouleaux. Selon l'invention, le sous-ensemble cardan 17 peut comprendre une motorisation 26 dans la première 19 des deux extrémités du berceau 18 destinée à entraîner le berceau 18 en rotation autour du deuxième axe de rotation 25. Le sous-ensemble cardan 17 peut comprendre un élément de transfert de puissance et de signaux 27 dans la seconde 20 des deux extrémités du berceau 18 destiné à transférer une puissance et des signaux entre la roue à inertie 21 et la plateforme. Les signaux issus de la roue à inertie 21 peuvent par exemple être des signaux de température, de vitesse, de position provenant de différents capteurs présents dans la roue à inertie 21. Le transfert de signal peut aussi s'opérer de la plateforme vers la roue, notamment pour la puissance pour l'alimentation de la roue. L'élément de transfert de puissance et de signaux 27 peut être un collecteur avec contact ou un transformateur sans contact. Avantageusement, un transformateur sans contact sera préféré au collecteur avec contact car ce composant améliore nettement les contraintes liées à la durée de vie. En effet, le collecteur avec contact opère par frottement entre des balais et des pistes pour le transfert de la puissance et des signaux. Les frottements limitent la durée de vie du collecteur et perturbent le pilotage du satellite lors du changement du sens de rotation du cardan.

L'actionneur gyroscopique 10 peut aussi comprendre un capteur de position ou de vitesse, par exemple dans la première extrémité 19 du berceau 18. Le capteur peut être un codeur optique permettant d'asservir la position et la vitesse de rotation du sous-ensemble cardan 17.

Le deuxième axe de rotation 25, c'est-à-dire l'axe de rotation du cardan, peut être incliné avec un certain angle par rapport au plan d'interface entre la structure principale 11 et la plateforme 12 en fonction des applications.

La partie motorisation est généralement composée d'un moteur, un capteur de position et/ou de vitesse et un roulement principal.

L'anneau 16 est une pièce complexe dont le rôle est d'assurer la rigidité nécessaire de l'ensemble suspendu 15 tout en s'interfaçant avec le sous-ensemble cardan 17 et les éléments de suspension 13 et de butée 14. Comme expliqué précédemment, l'anneau 16 peut avoir plusieurs formes, il n'est pas nécessairement circulaire, et avec une section de plusieurs formes possibles. Cette pièce peut être réalisée en fabrication additive à partir d'une forme organique optimisée.

Le berceau 18 peut être réalisé en fabrication additive à partir d'une forme organique optimisée.

Le sous-ensemble cardan 17 est guidé par rapport à une structure en forme d'anneau 16. Cet ensemble appelé ensemble suspendu 15 est suspendu par le ou les éléments de suspension 13.

La figure 4 représente l'ensemble suspendu 15 de l'actionneur gyroscopique 10 à double guidage selon l'invention. Le sous-ensemble cardan 17, c'est-à-dire l'anneau 16, le berceau 18 et la roue à inertie 21, a un centre de gravité Gc. Le sous-ensemble cardan 17 est configuré pour avoir son centre de gravité sur le deuxième axe de rotation 25. Cette configuration peut être obtenue par construction, avec une forme particulière du berceau 18 et/ou de la roue à inertie 21 et grâce à leur positionnement l'un par rapport à l'autre.

Pour avoir son centre de gravité sur le deuxième axe de rotation 25, le sous-ensemble cardan 17 peut comprendre au moins une masselotte 27 de façon à positionner le centre de gravité Gc du sous-ensemble cardan 17 sur le deuxième axe de rotation 25. La partie en rotation autour du deuxième axe de rotation 25, ou axe cardan, composée essentiellement de la roue à inertie 21 et du berceau 18 est équilibrée en rotation en plaçant son centre de gravité Gc sur l'axe de rotation 25. Une ou des masses d'équilibrage, aussi appelées masselottes 27, sont prévues sur le berceau 18 pour régler la position du centre de gravité Gc de la partie mobile, c'est-à-dire du sous-ensemble cardan 17, sur l'axe de rotation 25. Le nombre, le positionnement, la forme des masses d'équilibrage 27 peuvent varier selon la configuration considérée. Sur la figure 4, elles sont positionnées sur une face du berceau 18, néanmoins, elles pourraient également être positionnées sur une autre face du berceau 18 ou sur la roue à inertie 21. Le positionnement du centre de gravité Gc du sous-ensemble cardan 17 sur l'axe de rotation 25 permet d'éviter que la roue à inertie 21 ne tourne pendant le lancement et limite les micro-vibrations générées par la rotation du sous-ensemble cardan 17. Si ces micro-vibrations ne sont pas limitées, la performance est alors dégradée.

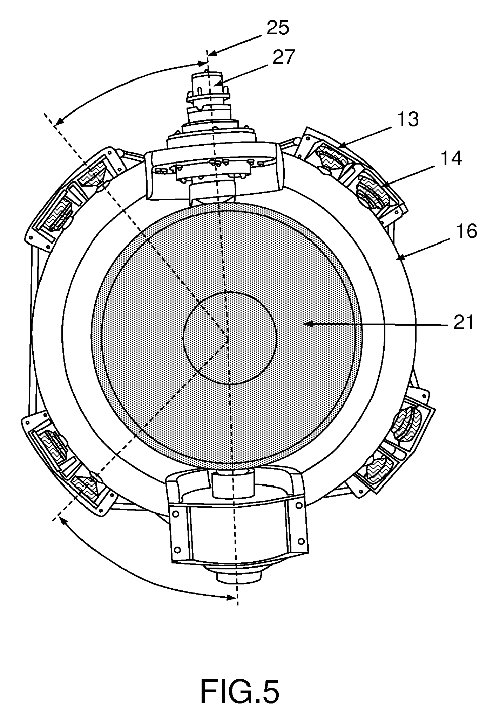

La figure 5 représente un exemple de configuration des éléments de suspension 13 et des éléments de butée 14 de l'actionneur gyroscopique 10 à double guidage selon l'invention. Cet exemple donne une configuration à quatre éléments de suspension 13 et quatre éléments de butée 14 dont les axes sont positionnés dans le même plan, les axes pointant vers le centre de gravité Gs de l'ensemble suspendu 15.

L'invention repose sur le fait d'utiliser des éléments de suspension 13 et de butée 14 pour réaliser une fonction de filtrage des micro-vibrations générées par la rotation de la roue à inertie 21 et par la motorisation du cardan lors des phases de manoeuvre et de prises de vue satellite par l'intermédiaire d'éléments de suspension 13, ainsi que pour réaliser une fonction de tenue des charges de lancement grâce aux éléments de butée 14.

En fonction de la masse mobile et des performances de filtrage à atteindre, ces éléments 13, 14 peuvent être multipliés autour de la charge mobile pour répondre au besoin recherché. Sur la figure 5, le nombre d'éléments de suspension 13 est égal au nombre d'éléments de butée 14, mais ce n'est pas nécessairement le cas. Le nombre d'éléments de suspension 13 peut être différent du nombre d'éléments de butée 14.

Les éléments de suspension 13 et les éléments de butée 14 sont montés entre l'ensemble à isoler générateur de micro-vibrations exportées et la structure principale 11 reliée à la plateforme. On peut noter que les éléments de suspension 13 et les éléments de butée 14 de l'invention peuvent être dimensionnés spécifiquement en fonction de l'utilisation qu'il en est faite, mais aussi il est important de souligner qu'ils peuvent être des éléments de suspension et de butée standard sans nécessité de les redimensionner quelle que soit l'actionneur gyroscopique. En effet, la modularité de ces éléments de suspension 13 et des éléments de butée 14 permet de choisir le nombre d'éléments et d'aménager ces éléments en fonction des performances à atteindre, de la masse mobile suspendue, des efforts au lancement.

Dans cette demande, nous faisons la distinction entre un élément de suspension 13 et un élément de butée 14. Néanmoins, l'invention s'applique de manière similaire à un élément commun qui est à la fois un élément de suspension et de butée. Autrement dit, il est possible d'appliquer l'invention avec un élément ayant à la fois le rôle d'un élément de suspension et d'un élement de butée

L'élément de suspension 13 et l'élément de butée 14 sont utilisés de manière complémentaire : en effet lors du lancement, l'élément de butée 14 assure la fonction de maintien. Le déplacement de la charge mobile est limité et amorti. Autrement dit, le déplacement de la charge mobile est contrôlé. Lors des prises de vue, les éléments de suspension 13 filtrent les micro-vibrations générées par l'ensemble suspendu 15 sans contact au niveau de l'élément de butée 14. La raideur des éléments de suspension 13 est plus faible que la raideur des éléments de butée 14, typiquement d'un facteur 10. Au lancement, l'élément de suspension 13 suit la déformation de l'élément de butée 14.

Plus précisément, un jeu tridimensionnel est créé autour de l'élément de butée 14. L'élément de suspension 13 travaille et filtre les micro-vibrations. Les rotations combinées de la roue à inertie 21 et du berceau 18 génèrent un couple gyroscopique à transmettre à la plateforme. Lors de la génération du couple gyroscopique, l'élément de suspension 13 est déformé jusqu'à ce que l'élément de butée 14 prenne le relais. L'élément de butée 14 se déforme lorsque le jeu est rattrapé et qu'il y a un contact avec l'élément de butée 14. Le couple gyroscopique est alors transmis à la plateforme essentiellement par l'élément de butée 14.

Les éléments de suspension 13 peuvent être placés dans un même plan, l'isobarycentre de l'ensemble de ces éléments est avantageusement confondu, ou coïncide sensiblement, avec le centre de gravité de l'ensemble suspendu 15. Les axes de ces éléments peuvent être placés dans un même plan ou non. Avantageusement, on peut choisir de placer les axes de ces éléments de suspension 13 à équidistance du centre de gravité de l'ensemble suspendu 15 et pointer ou non vers le centre de gravité de l'ensemble suspendu 15.

Les éléments de butée 14 peuvent également être placés dans un même plan, l'isobarycentre de l'ensemble de ces éléments est avantageusement confondu, ou coïncide sensiblement, avec le centre de gravité de l'ensemble suspendu 15. Les axes de ces éléments peuvent être placés dans un même plan ou non et pointer ou non vers le centre de gravité de l'ensemble suspendu 15.

Les plans contenant les axes des éléments de suspension 13 et des éléments de butée 14 peuvent être ou non confondus. Par exemple, on peut choisir de placer les axes des éléments de suspension 13 et des éléments de butée 14 dans un même plan et que ce plan contienne le centre de gravité de l'ensemble suspendu 15.

Les éléments de suspension 13 et les éléments de butée 14 peuvent être également aménagés selon les besoins avec des angles différents pour placer l'isobarycentre des éléments de suspension 13 et/ou des éléments de butée 14 au centre de gravité de l'ensemble suspendu 15.

La raideur de l'élément de suspension 13 est plus faible que la raideur de l'élément de butée 14, le but étant que la raideur de l'élément de butée 14 assure toute la tenue mécanique de la partie mobile lors du lancement. En mode de prise de vue, l'élément de suspension 13 filtre les micro-vibrations générées par la rotation de la roue 21 et la rotation du berceau 18, l'élément de butée 14 n'est pas sollicité : un jeu fonctionnel est présent tout autour de la butée.

De manière générale, la roue à inertie 21 et le berceau 18 constituant deux composants d'un premier bloc, l'ensemble suspendu 15 et la structure principale 11 constituant deux composants d'un deuxième bloc, l'actionneur gyroscopique 10 et la plateforme constituant deux composants d'un troisième bloc, on peut dire que le au moins un élément de suspension 13 est positionné entre les deux composants d'un bloc. De même, le au moins un élément de butée 14 est positionné entre les deux composants d'un bloc. On peut donc noter la totale modularité des éléments de suspension 13 et des éléments de butée 14 tant en ce qui concerne le nombre de chacun des éléments que le positionnement de ces éléments. Autrement dit, il est possible de positionner le ou les élements de suspension 13 et/ou le ou les éléments de butée 14 entre la roue à inertie 21 et le berceau 18 et/ou entre l'ensemble suspendu 15 et la structure principale 11 et/ou entre l'actionneur gyroscopique 10 et la plateforme 12. Pour chacune des configurations (entre la roue à inertie 21 et le berceau 18, entre l'ensemble suspendu 15 et la structure principale 11, entre l'actionneur gyroscopique 10 et la plateforme 12), les éléments de suspension 13 et/ou de butée 14 peuvent être répartis de manière uniforme ou non entre les deux composants du bloc correspondant et l'orientation des éléments de suspension 13 peut être la même pour tous les éléments de suspension, mais peut aussi différer. Il en est de même pour les éléments de butée 14. De plus les éléments de suspension 13 peuvent être orientés de la même manière que les éléments de butée 14 mais peuvent aussi être orientés différemment. La modularité de ces éléments est totale.

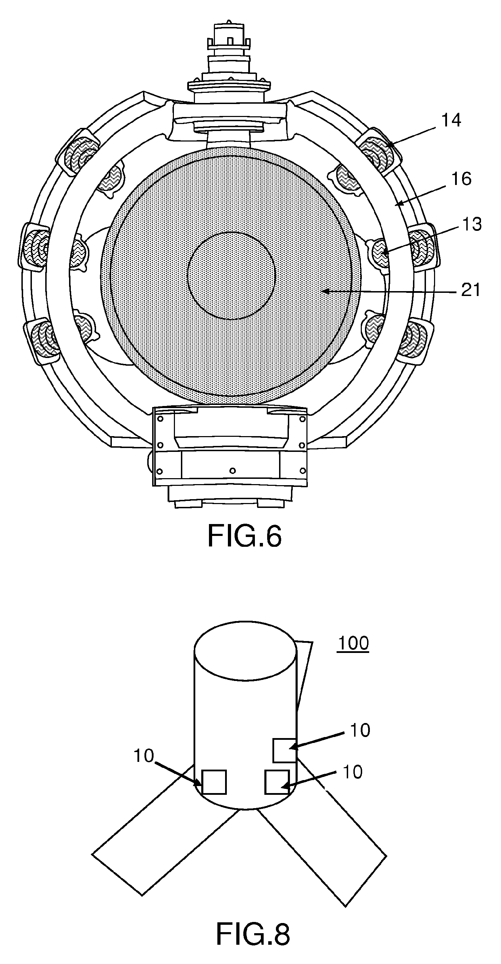

La figure 6 représente un autre exemple de configuration des éléments de suspension 13 et des éléments de butée 14 de l'actionneur gyroscopique 10 à double guidage selon l'invention.

Les éléments de suspension 13 et de butée 14 peuvent être répartis à souhait tant par leur nombre que par leur position sur l'anneau 16.

L'ensemble suspendu 15 a un centre de gravité Gs, le au moins un élément de suspension 13 a un isobarycentre. Et le au moins un élément de suspension 13 est aménagé de façon à ce que l'isobarycentre du au moins un élément de suspension 13 coïncide sensiblement avec le centre de gravité Gs de l'ensemble suspendu 15. De même, le au moins un élément de butée 14 a un isobarycentre. Le au moins un élément de butée 14 est aménagé de façon à ce que l'isobarycentre du au moins un élément de butée 14 coïncide sensiblement avec le centre de gravité Gs de l'ensemble suspendu 15.

Une solution préférentielle est de placer l'isobarycentre de l'ensemble de tous les éléments 13, 14 confondu avec le centre de gravité Gs de l'ensemble suspendu 15.

Ces éléments de suspension 13 et de butée 14 peuvent être répartis uniformément ou non autour de l'ensemble mobile.

Les plans contenant les éléments de suspension 13 et les éléments de butée 14 peuvent être confondus ou pas.

Les éléments de suspension 13 et de butée 14 permettent également de limiter les charges subies par les équipements montés sur l'ensemble suspendu 15. Par exemple, les niveaux de chocs injectés à la base du CMG, c'est-à-dire entre la structure principale 11 et la plateforme 12, sont filtrés par les éléments de suspension 13 et de butée 14. Cette solution permet d'implanter des éléments sensibles aux chocs sur l'ensemble suspendu 15, notamment le codeur optique et la roue à inertie 21.

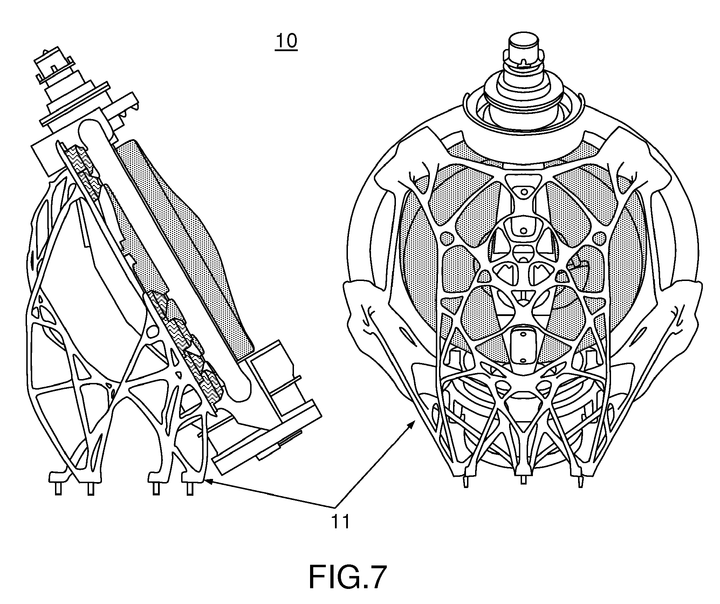

La figure 7 représente un mode de réalisation de la structure principale 11 de l'actionneur gyroscopique 10 à double guidage selon l'invention. La structure principale 11 supportant l'ensemble suspendu 15 peut être réalisée en fabrication additive à partir d'une forme organique optimisée. Cette possibilité permet d'obtenir une structure principale 11 de la forme, raideur et tenue souhaitées avec un gain de masse considérable comparé à une structure principale traditionnelle telle que représentée sur la figure 2. Par exemple, une structure principale telle que représentée sur la figure 2 pèse 9 kg alors que la structure principale représentée sur la figure 7 ne pèse que 3 kg. La structure principale 11 pouvant prendre n'importe quelle forme souhaitée, il est possible de choisir l'angle d'inclinaison du deuxième axe de rotation 25. Sur la figure 2, cet angle est d'environ 30°, mais l'adaptation possible de la forme de la structure principale 11 permet d'avoir n'importe quel angle d'inclinaison.

Ainsi l'invention propose une solution d'actionneur gyroscopique avec deux guidages et une motorisation plus petite, en intégrant les suspensions dans l'actionneur au plus près des composants générateurs de micro-vibrations et en réalisant un ensemble cardan complètement suspendu.

L'anneau permet de dégager beaucoup de place pour pouvoir placer les éléments de suspension et de butée.

Les avantages de cette solution sont une réduction des micro-vibrations transmises à la plateforme, avec possibilité de placer un système de suspension si besoin, la limitation de frottement grâce à l'utilisation d'un transformateur sans contact pour faire transiter la puissance et signaux de la roue, ce qui favorise la durée de vie et augmente les performances de l'actionneur gyroscopique car il n'y a pas de couple de frottement sec venant du collecteur. Un autre avantage majeur est la modularité des éléments de suspension et des éléments de butée. Le nombre d'éléments peut être multiplié et il est possible de les aménager pour se conformer au besoin en fonction du besoin de filtrage, de la masse suspendue, de la position du centre de gravité. Un avantage majeur est constitué par le filtrage des micro-vibrations générées à la source pour éviter l'effet d'amplification de ces micro-vibrations. De plus, les éléments de butée permettent de s'affranchir d'un système de gerbage onéreux. Selon l'invention, la charge mobile n'est pas gerbée grâce à l'utilisation d'éléments de butée. Enfin, les équipements embarqués sont protégés en limitant les charges au lancement par les éléments de butées.

L'invention concerne également un satellite comprenant au moins trois actionneurs gyroscopiques tels que décrits précédemment et configurés pour gérer l'orientation du satellite. La figure 8 représente schématiquement un satellite 100 comprenant au moins trois actionneurs gyroscopiques 10 selon l'invention. Avantageusement, le satellite 100 peut comprendre quatre actionneurs gyroscopiques (ou plus) afin d'assurer une redondance en cas de panne d'un des actionneurs gyroscopiques.

## Revendications

1. Actionneur gyroscopique (10) à double guidage destiné à équiper un satellite comprenant :
- une structure principale (11) reliée à une plateforme (12) ladite plateforme (12) étant destinée à être reliée au satellite,
- un anneau (16),
- un berceau (18) en forme de U, ayant une première extrémité (19) et une seconde extrémité (20) et une partie centrale,
- une roue à inertie (21) montée sur la partie centrale du berceau (18) entre la première et la seconde extrémités (19, 20), la roue à inertie (21) étant mobile en rotation par rapport au berceau (18) autour d'un premier axe de rotation (22),
**caractérisé en ce qu'**il comprend un premier palier (23) positionné à la première extrémité (19) du berceau (18) et un second palier (24) positionné à la seconde extrémité (20) du berceau (18) reliant l'anneau (16) au berceau (18), les premier et second paliers (23, 24) étant configurés pour rendre le berceau (18) mobile en rotation par rapport à l'anneau (16) autour d'un deuxième axe de rotation (25) sensiblement perpendiculaire au premier axe de rotation (22), et **en ce que** l'anneau (16) est relié à la structure principale (11).

2. Actionneur gyroscopique (10) selon la revendication précédente, **caractérisé en ce qu'**il comprend au moins un élément de suspension (13) apte à limiter des micro-vibrations issues du berceau (18) et de la roue à inertie (21).

3. Actionneur gyroscopique (10) selon l'une quelconque des revendications précédentes, **caractérisé en ce qu'**il comprend en outre au moins un élément de butée (14) apte à limiter un débattement du berceau (18) et de la roue à inertie (21) par rapport à la structure principale (11).

4. Actionneur gyroscopique (10) selon l'une quelconque des revendications précédentes, **caractérisé en ce qu'**il comprend une motorisation dans la première extrémité (19) du berceau (18) destinée à entraîner le berceau (18) en rotation autour du deuxième axe de rotation (25).

5. Actionneur gyroscopique (10) selon l'une quelconque des revendications précédentes, **caractérisé en ce qu'**il comprend un élément de transfert de puissance et de signaux (27) dans la seconde extrémité (20) du berceau (18) destiné à transférer une puissance et des signaux entre la roue à inertie (21) et la plateforme (12).

6. Actionneur gyroscopique (10) selon l'une quelconque des revendications précédentes, le berceau (18) et la roue à inertie (21) formant un sous-ensemble (17) ayant un centre de gravité, **caractérisé en ce que** le sous-ensemble (17) est configuré pour avoir son centre de gravité sur le deuxième axe de rotation (25).

7. Actionneur gyroscopique (10) selon l'une quelconque des revendications 2 à 6 en tant que revendications dépendantes de la revendication 2, l'anneau (16), le berceau (18) et la roue à inertie (21) formant un ensemble suspendu (15), la roue à inertie (21) et le berceau (18) constituant deux composants d'un premier bloc, l'ensemble suspendu (15) et la structure principale (11) constituant deux composants d'un deuxième bloc, l'actionneur gyroscopique (10) et la plateforme (12) constituant deux composants d'un troisième bloc, **caractérisé en ce que** le au moins un élément de suspension (13) est positionné entre les deux composants d'un bloc.

8. Actionneur gyroscopique (10) selon l'une quelconque des revendications 3 à 7 en tant que revendications dépendantes de la revendication 3, l'anneau (16), le berceau (18) et la roue à inertie (21) formant un ensemble suspendu (15), la roue à inertie (21) et le berceau (18) constituant deux composants d'un premier bloc, l'ensemble suspendu (15) et la structure principale (11) constituant deux composants d'un deuxième bloc, l'actionneur gyroscopique (10) et la plateforme (12) constituant deux composants d'un troisième bloc, **caractérisé en ce que** le au moins un élément de butée (14) est positionné entre les deux composants d'un bloc.

9. Actionneur gyroscopique (10) selon l'une quelconque des revendications 2 à 8 en tant que revendications dépendantes de la revendication 2, l'anneau (16), le berceau (18) et la roue à inertie (21) formant un ensemble suspendu (15) ayant un centre de gravité, le au moins un élément de suspension (13) ayant un isobarycentre, **caractérisé en ce que** le au moins un élément de suspension (13) est aménagé de façon à ce que l'isobarycentre du au moins un élément de suspension (13) coïncide sensiblement avec le centre de gravité de l'ensemble suspendu (15).

10. Actionneur gyroscopique (10) selon l'une quelconque des revendications 3 à 9 en tant que revendications dépendantes de la revendication 3, l'anneau (16), le berceau (18) et la roue à inertie (21) formant un ensemble suspendu (15) ayant un centre de gravité, le au moins un élément de butée (14) ayant un isobarycentre, **caractérisé en ce que** le au moins un élément de butée (14) est aménagé de façon à ce que l'isobarycentre du au moins un élément de butée (14) coïncide sensiblement avec le centre de gravité de l'ensemble suspendu (15).

11. Satellite (100) **caractérisé en ce qu'**il comprend au moins trois actionneurs gyroscopiques (10) selon l'une quelconque des revendications précédentes configurés pour gérer l'orientation du satellite.
